(19) Europäisches Patentamt
European Patent Office
Office européen des brevets

(11) **EP 1 259 021 B1**

(12) **EUROPÄISCHE PATENTSCHRIFT**

(45) Veröffentlichungstag und Bekanntmachung des Hinweises auf die Patenterteilung:
**14.05.2008 Patentblatt 2008/20**

(51) Int Cl.:
*H04L 7/00* (2006.01)        *H04B 1/707* (2006.01)

(21) Anmeldenummer: **02100489.0**

(22) Anmeldetag: **14.05.2002**

(54) **Verfahren und Einrichtung unter Verwendung eines Golay-Korrelator zur Synchronisation eines Funksenders mit einem Funkempfänger**

Method and apparatus using a Golay correlator for synchronising a radio transmitter with a radio receiver

Procédé et dispositif utilisant un corrélateur de Golay pour synchroniser un émetteur radio avec un récepteur radio

(84) Benannte Vertragsstaaten:
**AT BE CH CY DE DK ES FI FR GB GR IE IT LI LU MC NL PT SE TR**

(30) Priorität: **18.05.2001 DE 10124223**

(43) Veröffentlichungstag der Anmeldung:
**20.11.2002 Patentblatt 2002/47**

(73) Patentinhaber:
• **Philips Intellectual Property & Standards GmbH 20099 Hamburg (DE)**
Benannte Vertragsstaaten:
**DE**
• **NXP B.V. 5656 AG Eindhoven (NL)**
Benannte Vertragsstaaten:
**AT BE CH CY DK ES FI FR GB GR IE IT LI LU MC NL PT SE TR**

(72) Erfinder: **Kohlmann, Michael,**
**c/o Philips Corp. IP GmbH**
**52066 Aachen (DE)**

(74) Vertreter: **van der Veer, Johannis Leendert et al**
**NXP Semiconductors**
**Intellectual Property Department**
**High Tech Campus 60**
**5656 AG Eindhoven (NL)**

(56) Entgegenhaltungen:
**EP-A- 1 063 779        WO-A-00/67405**
**US-A- 5 566 202**

• **POPOVIC B M: "EFFICIENT GOLAY CORRELATOR" ELECTRONICS LETTERS, IEE STEVENAGE, GB, Bd. 35, Nr. 17, 19. August 1999 (1999-08-19), Seiten 1427-1428, XP000939652 ISSN: 0013-5194**

**Beschreibung**

Die Erfindung betrifft ein Verfahren und eine Einrichtung zur Synchronisation eines Funksenders und eines Funkempfängers, insbesondere im Mobilfunksystem, wobei ein Golay-Korrelator verwendet wird.

EP 1 063 779 offenbart einen CDMA demodulator mit einer Phasendrehung und anschließenden Golay-Korrelator

In der WO 00/67405 ist ein derartiges Verfahren beschrieben. Bei Mobilfunksystemen müssen sich die Basisstation und die Mobilstation synchronisieren. Die Mobilstation verwendet zu Beginn der Basisstationssuche einen primären Synchronisationskanal (PSCH), in dem sie die am jeweiligen Ort mit stärkster Leistung empfangbare Basisstationen sucht. Im UMTS-Mobilfunksystem, das mit dem CDMA-System arbeitet, beträgt die Länge der Synchronisationsfolge 256 Chips. Für die Synchronisation sind angepasste Filter (matched filter) vorgesehen. Diese sind als Golay-Korrelatoren ausgabildet.

In der WO 00/54424 ist ein Verfahren zur Synchronisation bei einem Funk-Kommunikationssystem beschrieben. Es werden Golayfolgen bzw. Golay-Korrelatoren verwendet.

Aus der WO 00/51392 ist ein Verfahren zur Reduzierung der Synchronisationszeit in einem drahtlosen CDMA-System bekannt. Die Kanalsynchronisation arbeitet mit dem Golaycode.

Ein Zellensuchkreis bei einem CDMA (Code Devision Multiple Access)-Kommunikationssystem ist auch in der US 6 088 382 beschrieben.

Aus der Literaturstelle IEEE Journal on selected areas in communications", Vol. 18, No. 8, August 2000, pp. 1470- 1482, ist die Zellensuche bei einem CDMA-Mobilfunksystem, insbesondere bei einem Breitband-CDMA-System im primären Synchronisationskanal (P-SCH) beschrieben. Um die Auswirkung von Frequenzfehlern auf die Synchronisation zu unterdrücken, werden Teillängen des Synchronisationssignals verarbeitet (vgl. Fig.6 in der letztgenannten Literaturstelle).

Die Golay-Korrelation ist an sich ein effizientes Verfahren, um eine Zeitschlitzsynchronisation beim UMTS-System zu erreichen. Dabei bildet der Golay-Korrelator ein angepasstes Filter (matched filter), das an die Synchronisation-Codefolge angepasst ist, welche periodisch über den primären Synchronisationskanal gesendet wird.

Jedoch ist die Standard-Golay-Korrelation sehr empfindlich im Hinblick auf gegebene Frequenzabweichungen zwischen den lokalen Oszillatoren (LOs), die im Sender und Empfänger arbeiten. Frequenzabweichungen beeinträchtigen damit die Synchronisation. Da die Trägerfrequenz beim UMTS-System entsprechend einer Chiprate von 3,84 Mchips/s bei 2 GHz liegt, wirken sich schon kleine Frequenzabweichungen erheblich aus. Eine hohe Frequenzkonstanz der Oszillatoren zu erreichen, ist aufwändig. in den Basisstationen ist ein solcher Aufwand vertretbar. In den Mobilstationen jedoch ist eine hohe Frequenzkonstanz unter wirtschaftlichen Gesichtspunkten kaum zu erreichen.

Aufgabe der Erfindung ist es, ein Verfahren und eine Einrichtung der eingangs genannten Art anzugeben, wobei keine hohen Anforderungen an die Frequenzkonstanz des lokalen Oszillators zu erfüllen sind

Erfindungsgemäß ist obigs Aufgabe durch die Merkmale der unabhängigen Ansprüche gelöst. Die Erfindung eignet sich zur Verwendung im UMTS mit CDMA

Durch die Erfindung ist erreicht, dass eine Synchronisation mit einem Golay-Korrelator auch bei geringer Frequenzkonstanz der Oszillatoren erreicht werden kann, ohne den Aufwand für die Hardware wesentlich zu erhöhen. Beim beschriebenen Verfahren ist der Rechenaufwand verringert, was sich letztlich auch stromsparend auswirkt.

Die Erfindung beruht auf der Erkenntnis, dass bei einer Korrelation von Teillängen der Synchronisationssignalfolge sich Frequenzabweichungen des Oszillators weniger auf das Korrelationsergebnis auswirken als bei einer Korrelation über die Gesamtlänge der Synchronisationssignalfolge.

Vorteilhafte Ausgestaltungen der Erfindung ergeben sich aus den Ansprüchen und der folgenden Beschreibung In der Zeichnung zeigen:

Figur 1 einen Standard (pruned)-Golay-Korrelator für eine Synchronisationssignalfolge von 256 chips nach dem Stand der Technik,

Figur 2 einen erfindungsgemäß modifizierten Golay- Korrelator und

Figur 3 ein Vergleichsdiagramm zu Synchronisationsergebnissen.

Der beispielsweise aus der WO 00/67405 bekannte Golay- Korrelator hat entsprechend der bei UMTS vorgesehenen Synchronisationssignallänge von 256 Chips acht Verzögerungsstufen D1 bis D8 mit aufeinanderfolgenden Verzögerungsfaktoren 2,4,1,8,32,16,64,128. Der Korrelator weist acht komplexe Multiplikatoren W1 bis W8 auf, die Multiplikationen mit +1 oder -1 durchführen. Außerdem sind komplexe Addierer A1 bis A13 vorgesehen. Der Golay-Korrelator bildet aus der Eingangs-Synchronisationsfolge $r(k)$ die Ausgangssignalfolge $c(k)$ am Addier A8. Beispielsweise liegt bei einer Teillänge hinter D6 am Addierer A6 das Signal $x(k)$ und an dem zugeordneten Addierer A12 das Signal y(k) an. Entsprechend der Funktion des Golay-Korrelators ergibt sich bei diesem Beispiel:

$$c(k) = x(k\text{-}D_8\text{-}D_7) + W_7 y(k\text{-}D_8) + W_8 x(k\text{-}D_7) - W_7 W_8 y(k).$$

Der für diese Synchronisation wesentliche Wert d(k) wird aus c(k) durch eine Betragsquadratbildung B gewonnen. Der Wert c(k) ist komplex; d(k) ist infolge der Betragsquadratbildung reell.

Der bisher beschriebene Golay-Korrelator ist geeignet, wenn keine größeren Frequenzabweichungen der Oszillatoren vorliegen. Wenn jedoch übliche Frequenzabweichungen bestehen, genügt das Signal d(k) nicht zur Synchronisation des Senders (Mobilstation oder Basisstation) mit dem Empfänger (Basisstation oder Mobilstation).

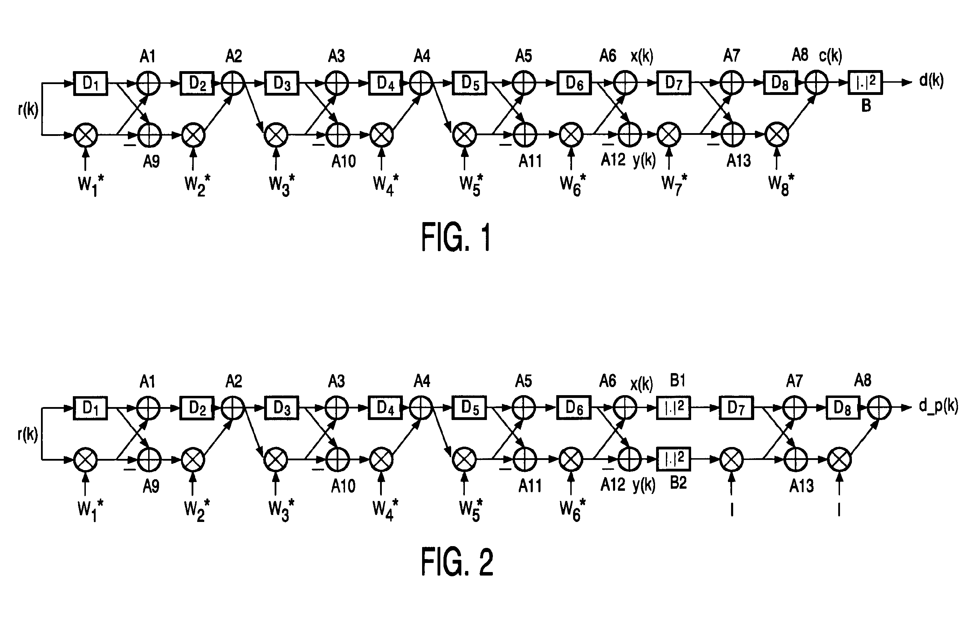

Die Figur 2 zeigt einen modifizierten Golay-Korrelator. Bei diesem ist nach dem komplexen Addierer A6, an dem das Signal x(k) ansteht, ein Betragsquadratbilder B1 und nach dem komplexen Addierer A12, an dem das Signal y(k) ansteht, ein Betragsquadratbilder B2 vorgesehen. Diese Betragsquadratbilder B1 und B2 liegen nach den Verzögerungsstufen D1 bis D6 und vor den Verzögerungsstufen D7 und D8. Damit erfolgt die Betragsquadratbildung schon nach der Verzögerungsstufe D6 derart, dass für die Bildung des für die Synchronisation wesentlichen Signals dp(k), das am Ausgang des Addierers A8 ansteht, eine Teilsignalfolge verwendet wird. Die beim Golay-Korrelator nach Figur 1 vorgesehenen komplexen Multiplikatoren W7 und W8 sind hier an sich überflüssig. Sie multiplizieren nur mit "1".

Vor der Betragsquadratbildung in B1 und B2 wird die Eingangssignalfolge komplex verarbeitet. Nach der Betragsquadratbildung in B1 und B2 werden die Signale x(k) und y(k) aufgrund der Betragsquadratbildung reell verarbeitet. Diese Betragsquadratbildung vor den Verzögerungsstufen D7 und D8 führt im Endergebnis dazu, dass das Ausgangssignal d_p(k) eine bessere Korrelation bzw. Synchronisation im primären Synchronisationskanal (PSCH) gewährleistet.

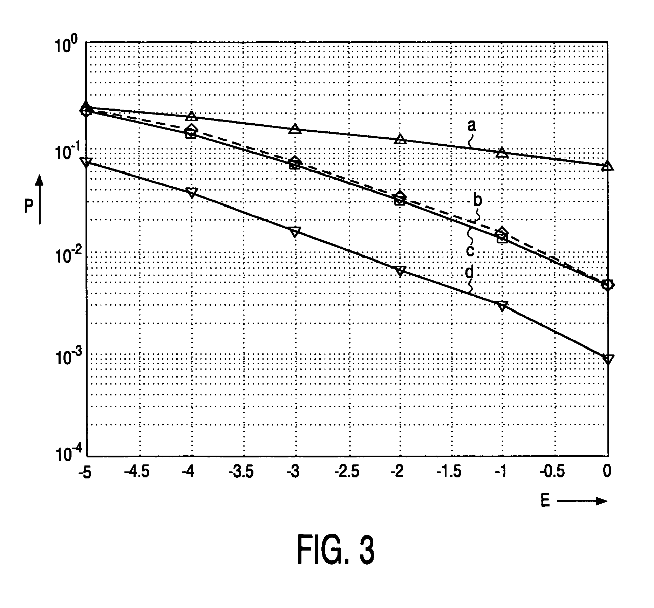

Figur 3 zeigt in Kurven a, b, c und d Synchronisationsergebnisse von Korrelationsverfahren im primären Synchronisationskanal, wobei P die Wahrscheinlichkeit ist, dass die Korrelation und damit die Synchronisation erfolglos ist, und E die relative Empfangsleistung ist.

Die Kurven a und b basieren auf einer Frequenzkonstanz des Oszillators <5,0 ppm (parts per million). Die Kurven c und d basieren auf einer Frequenzkonstanz <3,5 ppm. Bei den Kurven a und d ist über die gesamte Länge (256 chips) der Synchronisationsfolge korreliert und zwar mit einem Golay-Korrelator nach dem Stand der Technik (Fig. 1).

Bei den Kurven b unc c ist mittels des modifizierten Golay-Korrelators nach Figur 2 über eine Teillängs (64 chips) der Synchronisationsfolge korreliert. Die Kurve a ist das schlechteste Ergebnis. Die Kurven b und c zeigen mit zunehmender relativer Empfangsleistung eine stärker zunehmende Wahrscheinlichkeit des Synchronisationserfolgs als die Kurven a und d. Die Kurven b und c verlaufen ersichtlich näher beieinander als die Kurven a und d. Dies zeigt, dass durch das Korrelationsverfahren nach Figur 2 eine hohe Unempfindlichkeit des Synchronisationsergebnisses gegen Frequenzschwankungen erreicht ist. Versuche haben gezeigt, dass ein lokaler Oszillator genügt, der eine Frequenzkonstanz von nur etwa 15 ppm hat.

Liegt bei der Verwendung des Golay-Korrelators nach Figur 2 im Einzelfall eine hohe Frequenzkonstanz von 3,5 ppm vor und soll die Kurve d erreicht werden, dann kann eine Umschaltbarkeit des Golay-Korrelators von dem nach Figur 2 auf den nach Figur 1 vorgesehen sein. Hierzu sind lediglich die Betragsquadratbildner B1 und B2 zu überbrücken und statt mit "1" ist an der betreffenden Stelle komplex mit W7 bzw. W8 zu multiplizieren.

Mit dem beschriebenen Verfahren und der Einrichtung genügt in der Mobilstation oder der Basisstation ein preiswerter lokaler Oszillator, der keine hohe Frequenzkonstanz haben muss. Es ist auch keine Abstimmung des Oszillators nötig, die Rechenzeit und Speicherplatz erfordern würde.

Mit der gleichen Schaltung (Hardware) lassen sich verschiedene Arbeitsmodi des primären Synchronisationssignaldetektors ausführen. Bei dem modifizierten Golay-Korrelator sind in einem Synchronisationszyklus nur weniger komplexe Multiplikationen und komplexe Additionen durchzuführen als beim vergleichbaren Stand der Technik, was den Stromverbrauch der Mobilstation verringert.

**Patentansprüche**

1. Verfahren zur Synchronisation eines Funksenders und eines Funkempfängers, insbesondere im UMT5-Mobilfunksystem, wobei ein Golay Korrelator verwendet wird, **dadurch gekennzeichnet, dass** im Golay-Korretator eine Betragsquadratbildung (B1,B2) der Signale aus den vorhergehenden komplexen Stufen schon vor den letzten Verzögerungsstufen (D7,D8) erfolgt.

2. Verfahren nach Anspruch 1,
   **dadurch gekennzeichnet,**

**dass** die Betragsquadratbildung (B1,B2) vor der vorletzten Verzögerungsstufe (D7) erfolgt.

3. Verfahren nach Anspruch 1 oder 2,
   **dadurch gekennzeichnet,**
   **dass** die VerzögsrungaBtufen (D1 bis D6) nach denen die Betragsquadratbildung (B1,B2) erfolgt, einer TeiRange von 64 chips einer 256 chips umfassenden Synchronisationssignalfolge entsprechen

4. Verfahren nach einem der vohergehenden Ansprüche,
   **dadurch gekennzeichnet,**
   **dass** durch die Umschaltung des Golay-Korrelators die Betragsquadratbildung unterbleibt und auch die weiteren Stufen komplex arbeiten.

5. Einrichtung zur Durchführung des Verfahrens nach einem der vorhergehenden Ansprüche,
   **dadurch gekennzeichnet,**
   **dass** im Golay-Korrelator vor den letzten Verzögerungsstufen (D7,D8) Betragsquadratbildner (B1,B2) vorgesehen sind.

6. Einrichtung nach Anspruch 5,
   **dadurch gekennzeichnet,**
   **dass** den Verzögerungsstufen (D7,D8), vor denen die Betragsquadratbildung erfolgt, Multiplikatoren zugeordnet sind, die lediglich mit "1" multiplizieren.

7. Einrichtung nach Anspruch 6,
   **dadurch gekennzeichnet,**
   **dass** die Betragsquadratbildner (B1,B2) überbrückbar und mit den Multiplikatoren komplexe Multiplikationen durchführbar sind

## Claims

1. A method of synchronizing a radio transmitter and a radio receiver, notably in the UMTS mobile radio system, while utilizing a Golay correlator, **characterized in that** absolute value squaring (B1, B2) of the signals from the preceding complex stages is performed in the Golay correlator already before the last delay stages (D7, D8).

2. A method as claimed in claim 1, **characterized in that** the absolute value squaring (B1, B2) is performed prior to the last delay stage but one (D7).

3. A method as claimed in claim 1 or 2, **characterized in that** the delay stages (D1 to D6) subsequent to which the absolute value squaring (B1, B2) takes place correspond to a sub-length of 64 chips of a synchronization signal sequence comprising 256 chips.

4. A method as claimed in one of the preceding claims, **characterized in that** the absolute value squaring is dispensed with when the Golay correlator is switched over and the further stages also operate in a complex fashion.

5. A device for carrying out the method as claimed in any one of the preceding claims, **characterized in that** absolute value squarers (B1, B2) are provided in the Golay correlator so as to precede the last delay stages (D7, D8).

6. A device as claimed in claim 5, **characterized in that** the delay stages (D7, D8) upstream of which the absolute value squaring takes place are associated with multipliers which multiply merely by "1".

7. A device as claimed in claim 6, **characterized in that** the absolute value squarers (B1, B2) can be bridged and that complex multiplications can be carried out by means of the multipliers.

## Revendications

1. Procédé pour la synchronisation d'un émetteur radio et d'un récepteur radio, en particulier d'un système radio mobile UMTS, dans lequel on utilise un corrélateur Golay, **caractérisé en ce que**, dans le corrélateur Golay, s'effectue une formation au carré (B1, B2) des signaux à partir des étapes complexes précédentes dès avant les dernières étapes de temporisation (D7, D8).

2. Procédé selon la revendication 1,
   **caractérisé en ce que**
   la formation au carré (B1, B2) s'effectue avant l'avant-dernière étape de temporisation (D7).

3. Procédé selon la revendication 1 ou la revendication 2,
   **caractérisé en ce que**
   les étapes de temporisation (D1 à D6), selon lesquelles s'effectue la formation au carré (B1, B2), correspondent à une longueur partielle de 64 puces d'une suite de signaux de synchronisation comprenant 256 puces.

4. Procédé selon l'une des revendications précédentes,
   **caractérisé en ce que**
   la formation au carré est inhibée par la commutation du corrélateur Golay, tandis que les autres étapes fonctionnent de façon complexe.

5. Dispositif pour l'exécution du procédé selon l'une des revendications précédentes,
   **caractérisé en ce que**
   dans le corrélateur Golay, sont prévus, avant les dernières étapes de temporisation (D7, D8), des formateurs au carré (B1, B2) .

6. Dispositif selon la revendication 5,
   **caractérisé en ce que**
   des multiplicateurs sont affectés aux étapes de temporisation (D7, D8) avant lesquelles s'effectue la formation au carré, multiplicateurs qui ne multiplient que par "1".

7. Dispositif selon la revendication 6,
   **caractérisé en ce que**
   les formateurs au carré (B1, B2) peuvent être reliés et des multiplications complexes peuvent être effectuées avec les multiplicateurs.

FIG. 1

FIG. 2

EP 1 259 021 B1

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1063779 A
- WO 0067405 A
- WO 0054424 A
- WO 0051392 A
- US 6088382 A

**In der Beschreibung aufgeführte Nicht-Patentliteratur**

- *IEEE Journal on selected areas in communications,* August 2000, vol. 18 (8), 1470-1482